# EUROPEAN PATENT SPECIFICATION

(11) **EP 1 251 936 B1**
(45) Date of publication and mention of the grant of the patent: **30.03.2005**
(21) Application number: 00905583.1
(22) Date of filing: 11.01.2000
(51) Int. Cl.: B01D 53/94, B01D 53/86, B01D 53/96, B01J 23/58, B01J 23/96, B01J 38/10

(54) **PROCESS, CATALYST SYSTEM, AND APPARATUS FOR TREATING SULFUR COMPOUND CONTAINING GASEOUS EFFLUENT**
VERFAHREN, KATALYSATORSYSTEM UND VORRICHTUNG ZUR BEHANDLUNG VON SCHWEFELHALTIGEM GAS
PROCEDE, SYSTEME CATALYSEUR ET APPAREIL DE TRAITEMENT D'UN EFFLUENT GAZEUX CONTENANT DES COMPOSES SOUFRES

(43) Date of publication of application: 30.10.2002
(73) Proprietor: EMERACHEM LLC, Los Angeles, CA 90058 (US)
(72) Inventor: CAMPBELL, Larry, E., Knoxville, TN 37932 (US); EPLING, William, Shelbourne, Jr., Knoxville, TN 37932 (US); PARKS, James, Edgar, II, Knoxville, TN 37932 (US); WAGNER, Gregory, J., Knoxville, TN 37932 (US)
(74) Representative: Grünecker, Kinkeldey, Stockmair & Schwanhäusser Anwaltssozietät
(86) International application number: PCT/US2000/000617
(87) International publication number: WO 2001/051178

(56) References cited:
- EP-A- 0 657 204
- WO-A-96/20044
- US-A- 4 323 544
- US-A- 5 665 321
- US-A- 5 762 885
- US-A- 5 953 911
- US-A- 6 037 307
- US-B1- 6 325 984

## Description

### Field of the Invention

The present invention relates to removing nitrogen oxides (NOₓ) and gaseous sulfur compounds, particularly SO₂ and H₂S, from gaseous streams, in particular the exhaust of lean burn, internal combustion engines by using a regenerable catalyst system.

### Related Art

Gas desulfurization has been the subject of a variety of technologies. For example, in flue gas desulfurization, wet and dry scrubbing techniques have been developed. Dry scrubbing contacts the effluent with a solid material which chemically reacts with the sulfur component and forms a compound. The system can be a fixed bed such as zinc oxide pellets that are used to react with H₂S to form zinc sulfide. The zinc sulfide pellets must be removed and replaced after saturation. The dry scrubber can also be in powder or particulate injected into the stream followed by a baghouse or electrostatic filtration to remove the reacted product. An example of powder would be limestone, which would react after injection into the exhaust stream to form calcium sulfate and/or calcium sulfite hemihydrate sludge. The material is typically delivered as a wet slurry, which dries in the exhaust and reacts with the sulfur oxides. This material is then removed and typically disposed of in a landfill. There are also regenerable dry scrubber materials such as copper oxide on aluminum oxide pellets or spheres. The regenerable copper systems must be heated to and or reduced at high temperatures. This technique requires that the sorption temperature be less than the regeneration temperature.

Wet scrubbing techniques use wet slurries or amine solutions and require that the exhaust temperature be reduced to below the boiling point of the solutions to be used. These techniques give rise to losses by evaporation and entrainment and produce products which are contaminated and unusable and must be disposed of/or purified before reuse.

Diesel engines produce high levels of nitrogen oxides, carbon monoxide, unburned hydrocarbons from fuel, sulfur oxides and carbonaceous soot. The carbon monoxide and unburned fuel components can be effectively removed by an oxidation catalyst in the oxygen rich diesel exhaust environment. The oxides of nitrogen on the other hand present a special problem since they require a reducing environment to be converted to nitrogen, which is an abundant component of air. Selective catalytic reduction (SCR) in the presence of excess oxygen with ammonia and hydrocarbons have been studied extensively and used to a limited extent for treating diesel exhaust. The main problems associated with using SCR is that the reductant (ammonia) is hazardous and toxic; it must be stored and transported and that an appreciable amount of reductant is released to the environment (ammonia slip).

The SCR process abates NOₓ but normally does not abate carbon monoxide, hydrocarbons or sulfur oxides. The reaction of ammonia with sulfur oxides also produces particulate pollution which can foul the air as well as downstream heat transfer equipment.

U.S. Pat No. 5,451,558, which is incorporated herein in its entirety, discloses a method of decreasing the level of NOₓ, CO and SO₂ emissions from gas turbines using a regenerable catalyst/absorber, preferably made of alumina/platinum/carbonate salt to oxidize the pollutant oxides and absorb them. This system is used commercially under the trademark SCONOx and has been designated LAER (lowest achievable emission rate) by Division IX of the EPA for gas turbines. A regeneration for this type of catalyst/sorber is disclosed in U.S. Pat. No. 5,599,758 at temperatures in the range of 121,1 to 398,9°C (250 to 750°F). Although the system is effective for removing the gaseous sulfur compounds, data demonstrated that the catalyst performance toward NOₓ removal is diminished with extended use. This effect results from consumption of sorption sites brought about by the formation of sulfur compounds on the catalyst surface which are not destroyed during the conventional regeneration.

U.S. Pat. Application SN 09/113,258 filed July 10,1998, discloses a system for treating the exhaust of an industrial process or combustion source to capture gaseous sulfur compounds by contacting the exhaust with a structured support for example a monolith coated with a ceramic oxide for example TiO₂ containing a precious metal component for example Pt and a modifier such as Cu.

WO 96/20044 discloses a method of regenerating a catalyst/absorber system.

US 5,665,321 discloses a method of decreasing the level of NOₓ, CO and SO₂ emissions in a gas turbine.

US 5,953,911 discloses a method of conducting a shift reaction in a devitalized catalyst/absorber system.

US 6,037,307 discloses a system for treating the exhaust of an industrial process or combustion source.

EP 0 657 204 A1 discloses a catalyst for purifying exhaust gases.

US 4,323,544 discloses novel sorbents comprising an alumina support and a salt or a mixture of salts.

US 5,762,885 discloses an apparatus for regenerating a catalyst absorber.

However, there still remains a desire for improved catalyst/absorber systems.

Acccordingly the present invention provides a process according to claim 1, a catalyst according to claim 19 and an apparatus according to claim 31, a method according to claim 32 and preferred embodiments thereof as disclosed below and as defined in the subclaims 2 to 18, 20 to 30, and 33.

It is an advantage that the present catalyst system may be used to remove gaseous NOₓ and sulfur compounds from internal combustion engine exhaust and regenerated and reused. It is an advantage of the present invention that regeneration has been applied to remove the sulfur compounds formed on the catalyst/sorber and return the activity of the catatyst/sorber for NOₓ removal. A further advantage of the present invention is a catalyst system that prevents the formation of the sulfur compounds on the NOₓ selective catalyst/sorber. It is particular advantage the regeneration does not require a reducing agent other than the motor fuels. These advantages and other advantages and features of the present invention will become apparent from the following description.

### SUMMARY OF THE INVENTION

One aspect of the present invention is a process for removing gaseous nitrogen oxides (NOₓ) and/or sulfur compounds, particularly SO₂ and/or H₂S from gaseous streams, such as exhaust from internal combustion engines, comprising contacting a gaseous stream containing gaseous sulfur compounds and/or NOₓ flowing in a first direction with a catalyst system comprising discrete beds of component (a) a catatyst/sorber comprising a noble metal catalyst component, a metal oxide sorber component, and a modifier consisting of oxides of Ag, Cu, Bi, Sb, Sn, As, In, Pb, Au or mixtures thereof and component (b) a material comprising an oxidation catalyst selected from platinum, palladium, rhodium, cobalt, nickel, iron, copper, molybdenum or combinations thereof disposed on a high surface area support, an absorber material selected from a hydroxide, carbonate, bicarbonate of an alkali or alkaline earth or mixtures thereof under conditions to remove said gaseous sulfur compound and NOₓ from said stream to said catalyst system and retained therein to cause decrease in the capacity in said system to remove and retain said sulfur and NOₓ compounds; and thereafter regenerating the catalyst system comprising contacting said catalyst system with a regenerating gas flowing in a second direction reversed from said first direction under conditions to remove the retained sulfur and/or NOₓ compounds, said regenerating gas comprising a reducing gas whereby a portion of the capacity of the catalyst system to remove and retain said sulfur compounds and NOₓ is restored. A preferred embodiment comprises alternating said sorbing and regeneration steps.

In the embodiment wherein the catalyst system comprises the two discrete beds of component (a) and component (b) the beds are preferably arranged to have the exhaust gas first contact the (a) component.

The (b) component readily removes both the sulfur and NOₓ compounds, however it has been observed to that the sulfur abducted on this component is more difficult to remove than the nitrogen compounds and a higher temperature for the regeneration is required than for nitrogen removal alone. However the sulfur compounds are readily removed from the (a) component at lower temperatures. Thus by having the sulfur compounds first removed on to the (a) component and being prevented from contacting the (b) component, lower regeneration temperatures can be used while obtaining the benefit of high sulfur removal (component a) and high NOₓ removal(component b).

The regenerating gases provide a reducing environment. The reducing agents include hydrogen and hydrocarbons or mixtures thereof. The hydrocarbon preferably comprises of C₁-C₁₂ hydrocarbons, which may be used as one compound or mixtures of compounds. The principal component of the gaseous stream is an inert carrier gas such as nitrogen, helium, argon or steam. The term "principal component" is used to mean over 50%. Of particular significance is that both gasoline and distillate fuels such as diesel may be used as the reducing gas. Thus the fuel being used by an engine may be used for the regeneration, which is important in a non stationary engine such as found in automobiles tracks and locomotives.

The present invention also provides the catalyst system of claim 19. In component (a) the noble metal component may comprise Pt, Pd, Rh, Ru or mixtures thereof, preferably Pt. The metal oxide sorber component is an oxide of Ti, Zr, Hf, Ce, Al, Si or mixtures thereof. The modifier comprises an oxide of Ag, Cu, Bi, Sb, Sn, As In, Pb, Au or mixtures thereof, preferably Cu, Ag, Bi and mixtures thereof. The purpose of the modifier is to inhibit the formation of H₂S during regeneration. A variety of modifiers were determined to work; however, the most efficient were found to be copper, bismuth, and silver. The noble metal component is preferably present as from 0.005 to 20.0 wt% of the catalyst/sorber, the sorber component is preferably present as from 70 to 99 wt% of the catalyst/sorber, and the modifier is preferably present as from 1 to 10 wt% of the catalyst/sorber. Preferably the catalyst components can be coated onto a carrier with the catalyst/sorber comprising 1 to 50 wt% of the total weight. In a preferred (a) component Pt comprises 0.005 to 0.05 grams per cc of the noble metal catalyst component and a metal oxide sorber component.

In the (b) component the oxidation catalyst is selected from platinum, palladium, rhodium, cobalt, nickel, iron, copper, molybdenum or combinations thereof disposed on a high surface area support. Preferably the catalytic component is intimately and entirely coated with an absorber material selected from a hydroxide, carbonate, bicarbonate or mixture thereof of an alkali or alkaline earth or mixtures thereof. Preferably the oxidation catalyst concentration is 0.05 to 0.6 percent by weight of the component, more preferably 0.1 to 0.4 percent by weight, for example 0.15 to 0.3 percent by weight. In particularly preferred catalysts the platinum, palladium, rhodium, cobalt, nickel, iron, copper, molybdenum or combinations comprises 0.005 to 0.05 grams per cc of the total oxidation catalyst and absorber material and the alkali or alkaline earth comprises 0.000005 to 0.02 grams per cc of the total oxidation catalyst and absorber material. The preferred high surface area support is Al₂O₃, TiO₂, ZrO₂ SiO₂ or mixtures thereof.

The catalyst components can be used in pellet, spheres, particulate, or extruded form.

Another aspect of the present invention is an apparatus comprising:
A. an exhaust treatment configuration: at least two catalyst zones each preferably containing a catalyst system comprising discrete beds of (a) a catalyst/sorber comprising a noble metal catalyst component, a metal oxide sorber component, and a modifier consisting of oxides of Ag, Cu, Bi, Sb, Sn, As, In, Pb, Au or mixtures thereof and (b) a material comprising an oxidation catalyst selected from platinum, palladium, rhodium, cobalt, nickel, iron, copper, molybdenum or combinations thereof disposed on a high surface area support, an absorber material selected from a hydroxide, carbonate, bicarbonate of an alkali or alkaline earth or mixtures thereof; a main exhaust inlet line connected to an exhaust inlet valve, a separate secondary exhaust inlet line from said exhaust inlet valve connected adjacent to an component (a) of each of said catalyst zones; a separate secondary exhaust outlet line extending from each said catalyst zone adjacent to said component (b) and connecting to an exhaust outlet valve connected to a main exhaust outlet line extending from said exhaust outlet valve, whereby there is a vapor flow path though each said catalyst zone though both discrete beds thereof from inlets to outlets; and
B. a regeneration configuration comprising: a main regeneration gas inlet line connected to a regeneration gas valve, a separate secondary regeneration gas inlet line from said regeneration gas inlet valve connected to each said catalyst zone adjacent to said component (b); a separate secondary regeneration gas outlet extending from each said catalyst zone and connected to each said catalyst zone adjacent to said component (a); each said secondary regeneration gas outlet line being connected to a regeneration gas outlet valve and a main regeneration gas outlet line extending from said regeneration gas outlet valve.

Although the sulfur and NOₓ compounds are removed from a gaseous stream by the catalyst system according to the present invention, it is not known in what form or by what mechanism the sulfur and nitrogen are associated with the catalyst components, it is believed that the catalyst oxidizes the carbon monoxide and hydrocarbon pollutants to carbon dioxide, and water. Simultaneously, sulfur dioxide is oxidized to sulfur trioxide and nitrogen monoxide is oxidized to nitrogen dioxide both of which are sorbed by the sorbent component material which is preferably mixed intimately on a microscopic scale with the oxidation catalyst. It is the invention that the sulfur and NOₓ compounds in the gaseous stream are in some manner releasably associated with the catalyst/sorber in an oxidizing atmosphere and the invention is not intended to be limited by any proposed mechanism. Preferably the sulfur and/or nitrogen compounds are removed from the catalyst system as a more concentrated stream of sulfur and/or nitrogen compounds than were present in the exhaust gas. Unless otherwise stated percentages and ratios of compounds expressed herein are by weight.

### BRIEF DESCRIPTION OF THE DRAWINGS

Figure 1 is a graph showing NOₓ sorption from simulate diesel exhaust using a one component catalyst system.
Figure 2 is a graph showing NOₓ sorption from diesel engine exhaust using a two component catalyst system.
Figure 3 is schematic representation of a apparatus using a two component catalyst system for removing NOₓ and sulfur compounds.
Figure 4 is a graph showing NOₓ sorption using a two component catalyst system in an apparatus as shown in Figure 3.
Figure 5 is a graph showing NOₓ sorption using a one component catalyst system and comparing the regeneration conditions.

### DETAILED DESCRIPTION

### SORPTION

The sorption stage may be carried out at 37,8 to 537,8°C (100 to 1000°F), preferably 148,9 to 371,1°C (300 to 700°F) at GHSV 200 to 200,000 hr⁻¹ preferably 1,000 to 120,000 hr⁻¹. The pressures may range from subatmospheric to 3548,167 kPa (500 psig). GHSV, the gas hourly space velocity, is defined as volume of polluted gas, measured at 21,1°C and 0,101 MPa, that can be processed through 0.028 m³ of catalyst in one hour.

In carrying out the process, as the sorbent approaches saturation, the concentration of nitrogen oxides and sulfur oxides in the exhaust from the catalyst starts to rise from undetectable to detectable levels. When the detectable levels reach unacceptable levels, the exhaust flow is redirected to a second bed of like composition, which begins the oxidation and sorption process.

### DESORPTION/REGENERATION

For the two component catalyst system the desorption stage may be carried out at 37,8 to 537,8°C (100 to 1000°F), however lower/temperatures of about 148,9 to 426,7°C (300 to about 800°F) are preferred. The pressures may range from subatmospheric to 3548,167 kPa (500 psig). The rate of gas through the catalyst system during regeneration is GHSV 20 to 20,000 hr⁻¹, preferably 50 to 10,000 hr⁻¹

It is proposed that the spent catalyst sorbent is regenerated by chemically reducing the nitrogen dioxide to nitrogen and the sulfur trioxide to sulfur dioxide. This is achieved by exposing the saturated catalyst sorbent composite to a second separate gas stream of lower flow rate containing an inert carrier and/or a reducing gas. The spent regeneration gas contains nitrogen and sulfur dioxide which desorbs and purges out of the system. After regeneration the catalyst system is revitalized and placed back into service and the regeneration gas is redirected to another spent catalyst sorbent.

More importantly we have discovered that the reducing agent can be the fuel (diesel or gasoline) used to power the internal combustion engine. This is significant because a mobile engine would not have to carry a separate regeneration reductant such as ammonia if SCR were to be used.

Furthermore, we have discovered that premature degradation of catalyst/sorbent performance due to sulfur oxide exposure can be minimized or eliminated by using a sulfur rejection system comprised of a front bed of catalyst/sorber (component a of the two component catalyst system) which is specific for sulfur oxides but not active for nitrogen oxides.

By carrying out the present sorption/desorption the sulfur compounds in the feed may be concentrated from 5 to 100 times.

### CARRIER

If a carrier is utilized for the catalyst components, the carrier may be characterized as ceramic or metal monolith having a honeycomb structure. Preferably a carrier is used to distribute the catalyst, sorbers and modifiers. The components are deposited onto the carrier in the proportions desired. The composition of the ceramic carrier can be any oxide or combination of oxides. Suitable oxide carriers include the oxides of Al, Zr, Ca, Mg, Hf, Ti, and various mixtures of the oxides, such as cordierite and mullite.

The structure and composition of the carrier is of great importance. The structure of the carrier affects the flow patterns through the catalyst system which in turn affect the transport to and from the catalyst surface. The ability of the structure to effectively transport the compounds to be catalyzed to the catalyst surface influences the effectiveness of the catalyst/sorber. The carrier is preferably macroporous with 64 to 600 cells (pores) per 6,452 cm² (square inch) (cpsi) which is about 25 to 80 pores per 2,54 cm (linear inch) (ppi), although carriers having 5 to 90 ppi are suitable

### CONDITIONING

The (a) catalyst component may be conditioned by repeated sorption/desorption cycling. The amount of sulfur components released during this conditioning increases with each regeneration until it equals the amount sorbed. It was found that by pretreating the catalyst/sorber with dilute H₂SO₄, that the conditioning time was dramatically reduced. For example, instead of 12 hours, conditioning after H₂SO₄ treatment only required several hours at 148,9°C (300°F). The conditioning time was also found to be dependent on the temperature at which the sorption and regenerations were conducted. By increasing the temperature one can increase the amount released, hence, decreasing the conditioning time. A special conditioning may not be necessary, since the catalyst/sorber will become conditioned after several cycles of sorption/regeneration and remain so thereafter.

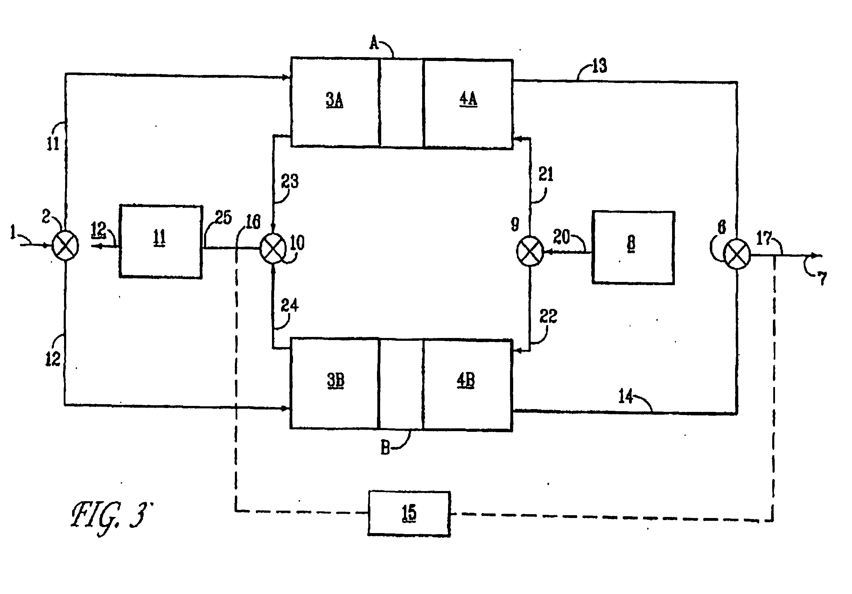

Turning now to Figure 3, an apparatus using the two-component catalyst system for treating an exhaust gas is shown schematically. Preferably, at least two catalyst sections are employed. There are two catalyst sections, A and B, each containing a two-component catalyst system, 3A/4A and 3B/4B. Each catalyst section A and B is connected alternatively to exhaust gas inlet 1 through valve 2 and lines 11 and 12 respectively adjacent to the 3A and 3B portion. The 3A portion of section A contains the sulfur selective catalyst designated as component (a), similarly the 3B portion of section B contains the sulfur selective catalyst. The 4A and 4B portions contain an NOₓ selective catalyst designated as component (b). Lines 13 and 14 extend from catalyst sections A and B respectively and enter valve 6 from which exhaust outlet 7 extends. This describes the NOₓ and sulfur removal configuration of the apparatus.

The regeneration configuration comprises a hydrocarbon source 8 which is the reducing agent/carrier and is attached to valve 9 via line 20. Lines 21 and 22 are alternatively connected catalyst sections A and B respectively adjacent to the (b) components. Lines 23 and 24 extend from catalyst to sections A and B respectively through valve 10 to line 25 which goes to a SO₂/H₂S sorbing cartridge 11 and hence to regeneration gas outlet 12.

The operation of the valves is preferably determined from an electronic sensor or sensors 17 in the exhaust outlet 7, which for example, detect NOₓ breakthrough which would indicate the need to regenerate the bed in question. Similarly sensor or sensors 16 would, for example, detect O₂ increase to indicate the regeneration of the bed in question is complete. Ideally controller 15 would operate valves 2. 6, 9 and 10 based on the sensed constitution of the stream in question. The regeneration operation should be no longer than the sorption operation, since the exhaust inlet gas should be directed to catalyst sections with capacity to sorb sulfur and NOₓ. In situations where this is not the case additional catalyst sections would be required to have a regenerated section always ready to accept the exhaust gas on NOₓ breakthrough in the section in current use.

In operation the exhaust gas would enter valve 2 through line 1 and be directed to either line 11 or 12. In this illustration the exhaust gas is directed through line 11 to catalyst section A where it first contacts the sulfur selective catalyst component (a) in bed 3A and then passes through NOₓ selective catalyst component (b) in bed 4A and exits via line 13 to valve 6 and hence to outlet line 7.

During all or part of this time a regeneration gas containing a reducing agent (as a gas) from tank 8 passes through line 20 into valve 9 which directs it through line 22 into catalyst section B where it desorbs sulfur compounds and nitrogen compounds sorbed in a prior sorption cycle. The desorbing gas enters in reverse flow direction to the exhaust gas and contacts the NOₓ selective catalyst component (b) 4B first then the sulfur selective catalyst component (a) 3B.

The sulfur in the regeneration gas is concentrated compared to the exhaust gas. The regeneration gas exits section B through line 24 into valve 10, line 16 and sulfur sorbing cartridge 11 and out through line 12.

At a given time or when the NOₓ breaks through in catalyst section A, valve 2 is reversed to send the exhaust gas to catalyst section B and valve 6 is reversed to exit exhaust from section B, while the regeneration gas to section B is terminated. Desirably the regenerating gas is now directed through valve 9 and line 21 to section A at 4A and the desorbed gas directed from section A through valve 10 and line 25 to cartridge 11 and exit 12 with the described cycle continuously repeating.

### EXAMPLES

Component (a) catalyst/sorbers used in the examples were prepared on 200 cell per 6,452 cm² (200-cell-per-square-inch) cordierite square-cell honeycomb. The TiO₂/Pt washcoat was prepared by incipient wetness. Pt content ranged from 0.1 to 2.2%. After drying and calcining at 500°C, the solids were then dispersed in 7% acetic acid and ball mined overnight. The ceramic honeycombs were then dipped into the slurry of washcoat/Pt, removed, blown off, and then dried at 150°C.

The samples were then immersed into a modifier solution, removed, blown off, and finally dried at 150°C. The catalyst/sorbers had a nominal composition as shown in Table 1.

**Table 1:**

| Catalyst/sorber Composition (except as otherwise noted): | | |
|---|---|---|
| TiO₂ | (0.4-3.5 g/in³) | 0.4 - 3.5g /16.387 cm³ |
| Pt | (0 - .08 g/in³) | 0 - 0.08g / 16.387 cm³ |
| X | (0 - 0.3 g/in³) | 0 - 0.3 g / 16.387 cm³ |

For testing, the samples were placed into a 304 stainless steel tubular reactor and placed inside a three-zone furnace. The reactor was connected to a gas delivery system which delivered mixed gases simulating a gas turbine exhaust. The gases were measured and controlled by Matheson mass flow transducers. Water was injected into a preheat furnace using a Cole Palmer instrument number 74900.

### Example 1 (COMPARISON)

A catalyst sorbent (the single catalyst or the b component) as taught in U.S. Patent No. 5,451,558 was prepared by coating a 200 cell per 6.452 cm² (200 cell/square inch) cordierite honeycomb with 0.098 gram high surface area Al₂O₃ per cc, 1.62 milligram/cc Pt and 7.93 milligram/cc K2CO3. The catalyst core sample was placed in a laboratory reactor for testing. A simulated diesel exhaust was used with a space velocity of 30,000/hr, 300 ppm NOₓ, 900 ppm CO, 8.0% oxygen, 7.6% CO₂, 10.0% H₂O, and a temperature of about 260°C (500°F). The simulated exhaust stream did not contain sulfur compounds during this example.

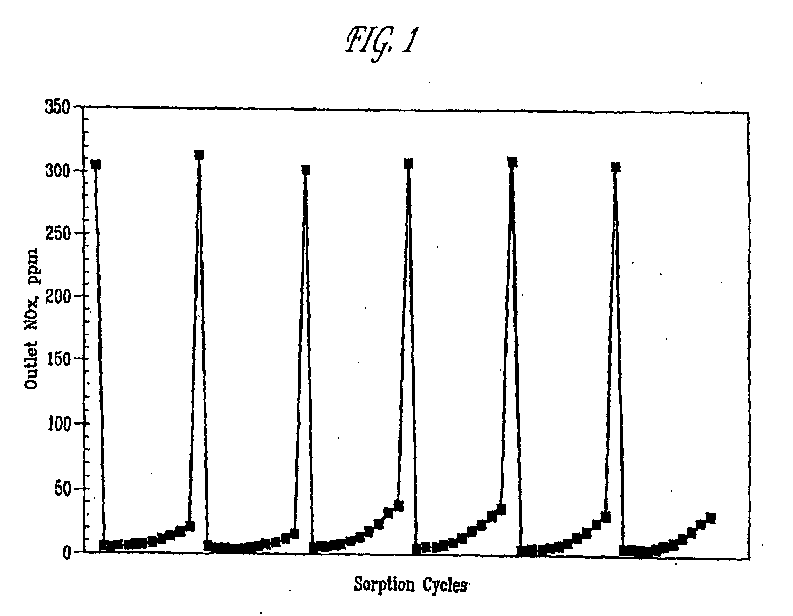

The catalyst sorbent was exposed for multiple cycles of two minute oxidation/sorption followed by two minute reductive regeneration. The regeneration gas used consisted of 9% methane in nitrogen at 260°C (500°F). The results of this experiment, shown in the accompanying Figure 1, illustrate that the outlet NOₓ drops from 300 to less than 2 ppm at the beginning of a sorption cycle. The outlet NOₓ then increases during the 2 minute cycle until reaching a final value of about 30 ppm. Initial inlet NOₓ values before each sorption cycle are also provided. The average NOₓ destruction efficiency obtained during this study was 95%.

### Example 2

A catalyst system was prepared by placing two catalyst/sorbers in series. The front segment (component a) was prepared by coating a 200 cell per 6.452 cm² (200 cell per square inch) cordierite honeycomb structure with 0.122 grams/cc TiO₂ and 1.84 milligram/cc Pt and 10.0 milligrams/cc Cu(O) as described above and in U.S. Pat. Application 09/113,258 which is incorporated herein in its entirety. Component (b) was prepared as in Example 1.

A fraction of the diesel exhaust produced by a 4-cylinder turbo-assisted engine with a displacement of 3.9 liters using #2 diesel fuel was filtered and passed through a laboratory reactor and the two catalyst/sorbers in series (component a first followed by component b). Various loads were applied to the engine via an electrical generator while maintaining a constant engine speed of 1900 rpm.

The diesel engine exhaust composition is shown in Table 1 for the associated engine loads.

**Table 2**

| Diesel engine exhaust composition under various loads | | | |
|---|---|---|---|
| Engine Load | 0% | 48% | 80% |
| NOₓ (ppm) | 250 | 905 | 1972 |
| SO₂ (ppm) | 2 | 18 | 25 |
| CO (ppm) | 375 | 95 | 54 |
| CO₂ (%) | 2.1 | 3.6 | 4.4 |
| O₂ (%) | 17.9 | 12.9 | 10.0 |

Tests were carried out at a space velocity of 12,000 hr⁻¹. The catalyst was regenerated with 2% H₂ gas in a nitrogen carrier at a space velocity of 2,000 hr⁻¹. The generation flow direction was opposite the exhaust gas flow.

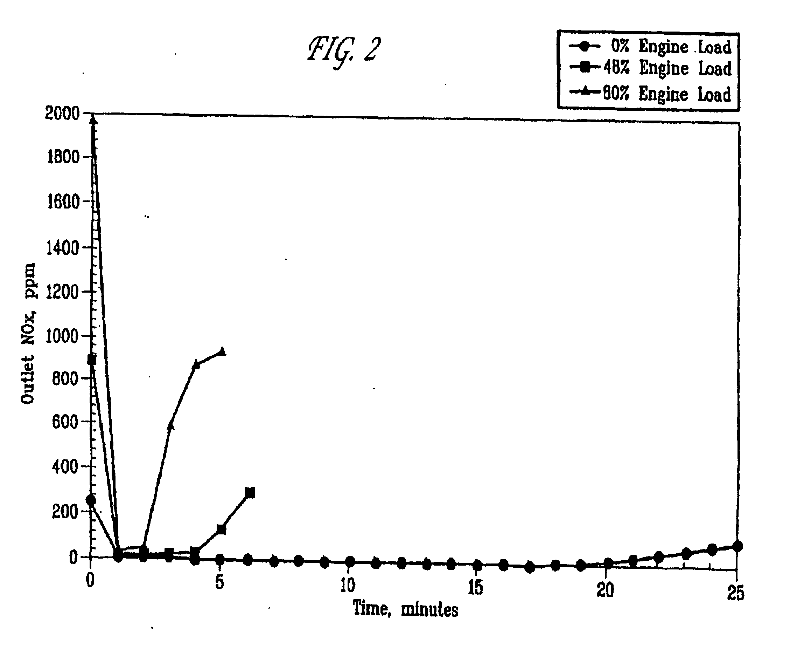

The average catalyst temperature was 371.1°C (700°F) during this run. Outlet NOₓ concentrations are shown in Figure 2 as a function of time for the engine loads shown in Table 2. The length of time the catalyst system will effectively remove NOₓ decreases with increasing inlet concentration of NOₓ. Table 3 shows the amount of time the catalysts remove greater than 90% of the NOₓ for each load and inlet NOₓ concentration. The SO₂ in the diesel exhaust was captured by component (a) of the two bed system during the oxidation mode and released as SO₂ in the regeneration flow stream.

**Table 3**

| Time for greater than 90% NOₓ removal for various NOₓ inlet concentrations. | | | |
|---|---|---|---|
| Engine Load | 0% | 48% | 80% |
| Inlet NOₓ (ppm) | 250 | 905 | 1972 |
| Time for >90% Removal | 20 minutes | 4 minutes | 2 minutes |

### Example 3

The two bed system described in example 2 was tested in a laboratory reactor with a simulated exhaust with composition of 70 ppm NOₓ, 10 ppm CO, 3.05% CO₂, 10% H₂O and 14.5% O₂ in nitrogen. The oxidation sorption cycle was carried out at 315.6°C (600°F), a space velocity of 30,000 hr⁻¹ for 15 minutes.

During oxidation/sorption the catalyst system removed the NOₓ to undetectable levels, them as catalyst sorption sites were filled, the concentration of NOₓ emitted rose to a final level of 12 ppm. The efficiency of NOₓ removal was 96.5%. At the end of the oxidation sorption cycle, regeneration was achieved with vapor-phase #2 diesel. Regeneration with diesel vapors was accomplished by injecting the liquid diesel into the hot nitrogen stream. The regeneration gas was then directed to the spent catalyst/sorber in a low direction opposite the simulated gas. The flow rate of diesel required for regeneration was 0.005 cc/min of liquid diesel; regeneration occurred at a space velocity of 3,500 hr⁻¹ for 3 minutes. Three minutes was found to be sufficient for complete regeneration. Thus, 0.41 g of diesel fuel per gram of NOₓ (as NO₂) was required to convert the NOₓ to N₂. Subsequent oxidation/sorption cycles showed a fully revitalized catalyst.

### Example 4

A two-chamber assembly was constructed as depicted in Figure 3. The catalyst system composition and configuration used was the same as that in examples 2 and 3. The diesel exhaust was produced by a 4-cylinder turbo-assisted engine with a displacement of 3.9 liters; the fuel was #2 diesel. A 48% load was applied to the engine via an electrical generator while maintaining a constant speed of 1900 rpm. All of the engine exhaust was passed over the catalyst at a space velocity of 11,800 hr⁻¹. No particulate filter was used to remove particulate matter from the exhaust prior to the catalyst.

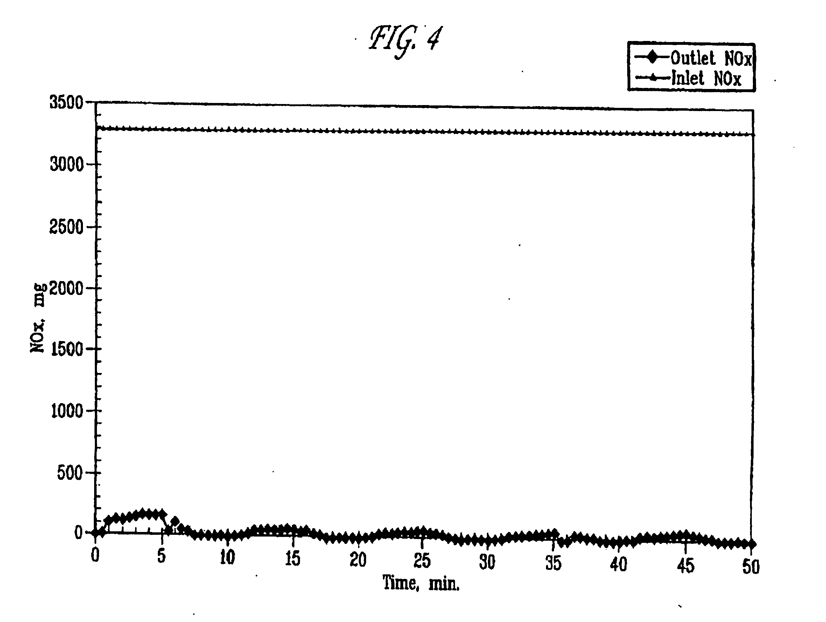

The average exhaust inlet temperature to the catalyst was 273,9°C (525°F). The catalyst was cycled between the engine exhaust stream for 5 minutes and a regeneration gas for 5 minutes. The regeneration gas consisted of 14% H₂ in nitrogen at a space velocity of 220 hr⁻¹. The catalyst removed 98.9% of the inlet NOₓ over a 50-minute test period. This is illustrated in Figure 4.

### Example 5

Examples 2, 3 and 4 used a two-bed catalyst/sorbent system. This configuration was desirable to prevent excessive sulfur oxide exposure to the second bed. It had been shown that the Pt/Al₂O₃/K₂CO₃ system described in Example 1 was more difficult to regenerate if exposed to excessive sulfur oxide. A catalyst prepared by coating a 200 cell per 6.452 cm² (200 cell per square inch) cordierite honeycomb structure coated with 0.122 grams/cc TiO2, 1.84 milligram/cc Pt and 7.93 milligrams/cc Na₂CO₃ was more easily regenerated with exposed to sulfur oxides.

In this example a single bed of the TiO₂/Pt/Na₂CO₃ catalyst/sorber was placed in a laboratory reactor and exposed to an oxidizing sorption cycle with simulated exhaust mixture containing 70ppm NOₓ, 50 ppm CO, 3.05% CO₂, 10% H2) and 14.5% O₂ in nitrogen. The run was carried out at 315.6°C (600°F) and with a space velocity of 22,500 hr⁻¹.

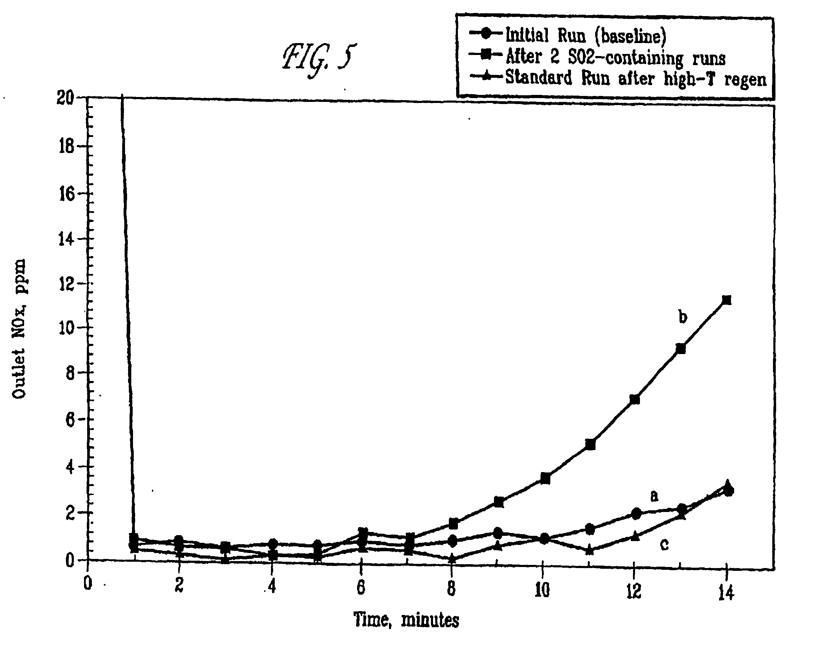

The results demonstrated that all of the carbon monoxide was oxidized to carbon dioxide upon contact with the catalyst. The outlet NOₓ levels are shown in Figure 5 as a function of the exposure time. Alter approximately 9 minutes of catalyst exposure to the simulated exhaust stream the NOₓ outlet concentration (curve a) begins to increase, achieving a value of approximately 3.8 ppm after a 14 minute exposure. After each oxidation sorption cycle regeneration is carried out using 2% methane in nitrogen at 315.6°C (600°F).

Also shown in Figure 5 are NOₓ emissions obtained after two more cycles of simulated exhaust stream, but with 30 ppm of sulfur dioxide added to the simulated exhaust stream (curve b). The data demonstrates that the catalyst performance toward NOₓ removal is diminished with extended use. This effect results from consumption of sorption sites brought about by the formation of Na₂SO₄ on the catalyst surface which, are not destroyed during regeneration at (600°F).

The catalyst sample was then exposed to the same regeneration stream as previous, however, during this regeneration cycle the temperature was raised to 443.3°C (830°F). Data obtained during this regeneration showed the removal of sulfur from the catalyst surface with the release of both SO₂ and H₂S.

After the high-temperature exposure to the regeneration gas, the reactor was cooled to 315.6°C (600°F) and another test run was accomplished using the simulated exhaust stream. The data from this test are also shown in Figure 5 (curve c). The catalyst now performs as it did during the initial test before exposure to the sulfur dioxide containing streams.

Generally herein the gas being treated is referred to as "exhaust gas", which is a preferred use for the present catalyst system, processes and apparatus, however, gas from any source may be used and the term "exhaust gas" is used herein to include all sources.

## Claims

1. A process for removing gaseous sulfur compounds and/or NOₓ, comprising contacting a gaseous stream containing gaseous sulfur compounds and/or NOₓ with a catalyst system comprising discrete beds of (a) a catalyst/sorber comprising a noble metal catalyst component, a metal oxide sorber component, and a modifier consisting of oxides of Ag, Cu, Bi, Sb, Sn, As, In, Pb, Au or mixtures thereof and (b) a material comprising an oxidation catalyst selected from platinum, palladium, rhodium, cobalt, nickel, iron, copper, molybdenum or combinations thereof disposed on a high surface area support, an absorber material selected from a hydroxide, carbonate, bicarbonate of an alkali or alkaline earth or mixtures thereof under conditions to remove said gaseous sulfur compound and/or NOₓ from said stream to said catalyst system and retained therein to cause a decrease in the capacity in said system to remove and retain said sulfur and/or NOₓ compounds; and thereafter regenerating the catalyst system comprising contacting said catalyst system with a regenerating gas under conditions to remove the retained sulfur and/or NOₓ compounds, said regenerating gas comprising a reducing gas whereby a portion of the capacity of the catalyst system to remove and retain said sulfur compounds and NOₓ is restored.

2. The process according to claim 1 wherein said gaseous stream containing gaseous sulfur compounds and/or NOₓ flows in a first direction and said regenerating gas flows in a second direction reverse to said first direction.

3. The process according to claim 2 wherein gasoline is present in said regenerating gas.

4. The process according to claim 2 wherein diesel is present in said regenerating gas.

5. The process according to claim 1 wherein the (a) catalyst/sorber comprises Pt and is supported on a ceramic oxide.

6. The process according to claim 5 wherein Pt comprises 0.005 to 0.05 grams per cc of the noble metal catalyst component and a metal oxide sorber component.

7. The process according to claim 1 wherein said noble metal catalyst component of (a) comprises Pt, Pd, Rh, Ru or mixtures thereof.

8. The process according to claim 1 wherein the metal oxide sorber component of (a) is an oxide of Ti, Zr, Hf, Ce or mixtures thereof.

9. The process according to claim 7 wherein the metal oxide sorber component of (a) is an oxide of Ti, Zr, Hf, Ce or mixtures thereof.

10. The process according to claim 1 wherein the modifier of (a) is Cu, Ag, Bi or mixtures thereof.

11. The process according to claim 9 wherein the modifier of (a) is an oxide Cu, Ag, Bi or mixtures thereof.

12. The process according to claim 11 wherein the modifier of (a) is Cu oxide.

13. The process according to claim 11 wherein the modifier of (a) is Ag oxide.

14. The process according to claim 11 wherein the modifier of (a) is Bi oxide.

15. The process according to claim 1 where the regeneration gas comprises an inert carrier and a reducing component.

16. The process according to claim 15 where the inert gas is nitrogen, helium, argon, or steam.

17. The process according to claim 16 wherein the reducing component is hydrogen, methane, hydrocarbons from C₁ to C₁₂ or mixtures thereof.

18. The process according to claim 1 wherein the regeneration gas comprises oxygen.

19. A catalyst system comprising discrete beds of (a) a catalyst/sorber comprising a noble metal catalyst component, a metal oxide sorber component, and a modifier consisting of oxides of Ag, Cu, Bi, Sb, Sn, As, In, Pb, Au or mixtures thereof and (b) a material comprising an oxidation catalyst selected from platinum, palladium, rhodium, cobalt, nickel, iron, copper, molybdenum or combinations thereof disposed on a high surface area support, an absorber material selected from a hydroxide, carbonate, bicarbonate of an alkali or alkaline earth or mixtures thereof.

20. The catalyst system according to claim 19 wherein said noble metal catalyst component of (a) comprises Pt, Pd, Rb, Ru or mixtures thereof.

21. The catalyst system according to claim 20 wherein the metal oxide sorber component of (a) is an oxide of Ti, Zr, Hf, Ce or mixtures thereof.

22. The catalyst system according to claim 21 wherein the modifier of (a) is Cu, Ag, Bi or mixtures thereof.

23. The catalyst system according to claim 22 wherein the modifier of (a) is Cu oxide.

24. The catalyst system according to claim 22 wherein the modifier of (a) is Ag oxide.

25. The catalyst system according to claims 22 wherein the modifier of (a) is Bi oxide.

26. The catalyst system according to 20 wherein said platinum, palladium, rhodium, cobalt, nickel, iron, copper, molybdenum or combinations of (b) comprises 0.005 to 0.05 grams per cc of the total oxidation catalyst and absorber material.

27. The catalyst system according to claim 26 wherein said high surface area support of (b) is Al₂O₃, TiO₂, ZrO₂ SiO₂ or mixtures thereof.

28. The catalyst system according to claim 27 the alkali or alkaline earth of (b) comprises 0.000005 to 0.02 grams per cc of the total oxidation catalyst and absorber material.

29. The catalyst system according to claim 28 wherein the metal oxide sorber component of (a) is an oxide of Ti, Zr, Hf, Ce or mixtures thereof.

30. The catalyst system according to claim 29 wherein the modifier of (a) is Cu oxide.

31. An apparatus comprising:
A. an exhaust treatment configuration:
(1) at least two catalysts zones, each said catalyst zone containing a catalyst system comprising discrete beds of (a) a catalyst/sorber comprising a noble metal catalyst component, a metal oxide sorber component, and a modifier consisting of oxides of Ag, Cu, Bi, Sb, Sn, As, In, Pb, Au or mixtures thereof and (b) a material comprising an oxidation catalyst selected from platinum, palladium, rhodium, cobalt, nickel, iron, copper, molybdenum or combinations thereof disposed on a high surface area support, an absorber material selected from a hydroxide, carbonate, bicarbonate of an alkali or alkaline earth or mixtures thereof,
(2) a main exhaust inlet line connected to
(3) an exhaust inlet valve,
(4) a separate secondary exhaust inlet line from said exhaust inlet valve connected adjacent to the (a) bed of each of said catalyst zones,
(5) a separate secondary exhaust outlet line extending from each said catalyst zone adjacent to the (b) bed thereof and connecting to
(6) an exhaust outlet valve connected to a main exhaust outlet line extending from said exhaust outlet valve, whereby there is a vapor flow path though each said catalyst zone though both discrete beds thereof from inlets to outlets in a configuration,
and
B. a regeneration configuration comprising:
(1) a main regeneration gas inlet line connected to
(2) a regeneration gas valve,
(3) a separate secondary regeneration gas inlet line from said regeneration gas inlet valve connected to each said catalyst zones adjacent to said (b) beds thereof,
(4) a separate secondary regeneration gas outlet extending from each said catalyst zone adjacent to the (a) bed thereof and connected to,
(5) a regeneration gas outlet valve and
(6) a main regeneration gas outlet line extending from said regeneration gas outlet valve.

32. A method of treating a gaseous stream containing gaseous sulfur compounds and/or NOₓ compounds in an apparatus according to claim 31 comprising the steps of:
A. a treatment cycle comprising:
(1) feeding a gas containing gaseous sulfur compound and/or NOₓ compounds to said main exhaust inlet line to said exhaust inlet valve,
(2) adjusting said exhaust inlet valve to a first catalyst zone for contact with said catalyst system,
(3) passing said gas containing gaseous sulfur compound and/or NOₓ compounds through said secondary exhaust inlet line to said first catalyst zone to contact said (a) bed first, and withdrawing said exhaust stream from said first catalyst zone through said secondary exhaust outlet line to said exhaust valve,
(4) said exhaust outlet valve being adjusted to connect with said main exhaust outlet line,
(5) adjusting said exhaust inlet valve and said exhaust outlet valve from said first catalyst zone to a different catalyst zone thereby terminating said feeding of gas containing gaseous sulfur compound and/or NOₓ compounds; and
B. a regenerating gas cycle after said treatment cycle comprising:
(1) feeding a regenerating gas through said main regenerating gas line to said regenerating gas valve,
(2) adjusting said regenerating gas valve to contact with said first catalyst zone and passing said regenerating gas through said secondary regenerating gas line to said first catalyst zone to contact said (b) bed first,
(3) withdrawing said regenerating gas from said first catalyst zone through said secondary regenerating gas line to
(4) said regenerating gas valve which is adjusted to connect to said main regenerating gas line.

33. The process according to claim 32 wherein the treatment cycle and regeneration cycle are repeated.

## Patentansprüche

1. Verfahren zur Entfernung von gasförmigen Schwefelverbindungen und/oder NOₓ, umfassend das in Kontaktbringen eines gasförmigen Stromes enthaltend gasförmige Schwefelverbindungen und/oder NOₓ mit einem Katalysatorsystem umfassend getrennte Betten (discrete beds) aus (a) einem Katalysator/Sorber umfassend einen Edelmetallkatalysatorbestandteil, ein Metalloxidsorberbestandteil, einen Modifikator bestehend aus Oxiden aus Ag, Cu, Bi, Sb, Sn, As, In, Pb, Au oder deren Mischungen und (b) einem Material umfassend einen Oxidationskatalysator gewählt aus Platin, Palladium, Rhodium, Kobalt, Nickel, Eisen, Kupfer, Molybdän oder deren Kombinationen, abgeschieden auf einem Träger mit hoher Oberfläche, einem Absorbermaterial gewählt aus einem Hydroxid, Carbonat, Bicarbonat eines Alkali oder Erdalkali oder deren Mischungen unter Bedingungen, um die gasförmige Schwefelverbindung und/oder NOₓ aus diesem Strom heraus in das Katalysatorsystem zu entfernen und darin zu halten, um eine Verringerung der Kapazität in diesem System zu bewirken, um das Schwefel und/oder NOₓ Verbindungen zu entfernen und zurückzuhalten; und anschließend Regenerieren des Katalysatorsystems umfassend das in Kontaktbringen des Katalysatorsystems mit einem Regenerationsgas unter Bedingungen, um den zurückgehaltenen Schwefel und/oder NOₓ Verbindungen zu entfernen, wobei das Regenerationsgas ein Reduktionsgas umfasst, wobei ein Teil der Kapazität des Katalysatorsystems zur Entfernung und zur Zurückhaltung der Schwefelverbindungen und NOₓ wieder hergestellt wird.

2. Verfahren nach Anspruch 1, wobei der gasförmige Strom, welcher die gasförmigen Schwefelverbindungen und/oder NOₓ enthält, in eine erste Richtung fließt und das Regenerationsgas in eine zweite Richtung fließt, entgegengesetzt zu der ersten Richtung.

3. Verfahren nach Anspruch 2, wobei Benzin in dem Regenerationsgas vorhanden ist.

4. Verfahren nach Anspruch 2, wobei Diesel in dem Regenerationsgas vorhanden ist.

5. Verfahren nach Anspruch 1, wobei der (a) Katalysator/Sorber Pt umfasst und von einem keramischen Oxid getragen bzw. unterstützt wird.

6. Verfahren nach Anspruch 5, wobei Pt 0,005 bis 0,05 Gramm je cc des Edelmetallkatalysatorbestandteils und eines Metalloxidsorberbestandteils umfasst.

7. Verfahren nach Anspruch 1, wobei der Edelmetallkatalysatorbestandteil von (a) Pt, Pd, Rh, Ru oder deren Mischungen umfasst.

8. Verfahren nach Anspruch 1, wobei der Metalloxidsorberbestandteil aus (a) ein Oxid von Ti, Zr, Hf, Ce oder deren Mischungen ist.

9. Verfahren nach Anspruch 7, wobei der Metalloxidsorberbestandteil aus (a) ein Oxid von Ti, Zr, Hf, Ce oder deren Mischungen ist.

10. Verfahren nach Anspruch 1, wobei der Modifikator von (a) Cu, Ag, Bi oder deren Mischungen ist.

11. Verfahren nach Anspruch 9, wobei der Modifikator von (a) ein Oxid von Cu, Ag, Bi oder deren Mischungen ist.

12. Verfahren nach Anspruch 11, wobei der Modifikator von (a) Cu-Oxid ist.

13. Verfahren nach Anspruch 11, wobei der Modifikator von (a) Ag-Oxid ist.

14. Verfahren nach Anspruch 11, wobei der Modifikator von (a) Bi-Oxid ist.

15. Verfahren nach Anspruch 1, wobei das Regenerationsgas einen inerten Träger und einen reduzierenden Bestandteil umfasst.

16. Verfahren nach Anspruch 15, wobei das inerte Gas Stickstoff, Helium, Argon oder Dampf ist.

17. Verfahren nach Anspruch 16, wobei der reduzierende Bestandteil Wasserstoff, Methan, Kohlenwasserstoffe von C₁ bis C₁₂ oder deren Mischungen ist.

18. Verfahren nach Anspruch 1, wobei das Regenerationsgas Sauerstoff umfasst.

19. Katalysatorsystem umfassend getrennte Betten aus (a) einem Katalysator/Sorber umfassend ein Edelmetallkatalysatorbestandteil, ein Metalloxidsorberbestandteil, ein Modifikator bestehend aus Oxiden von Ag, Cu, Bi, Sb, Sn, As, In, Pb, Au und deren Mischungen und (b) einem Material umfassend einen Oxidationskatalysator gewählt aus Platin, Palladium, Rhodium, Kobalt, Nickel, Eisen, Kupfer, Molybdän oder deren Kombinationen, abgeschieden auf einem Träger mit hoher Oberfläche, einem Absorbermaterial gewählt aus einem Hydroxid, Carbonat, Bicarbonat eines Alkali oder Erdalkali oder deren Mischungen.

20. Katalysatorsystem nach Anspruch 19, wobei der Edelmetallkatalysatorbestandteit aus (a) Pt, Pd, Rh, Ru oder dessen Mischungen umfasst.

21. Katalysatorsystem nach Anspruch 20, wobei der Metaltoxidsorberbestandteil aus (a) ein Oxid von Ti, Zr, Hf, Ce oder deren Mischungen ist.

22. Katalysatorsystem nach Anspruch 21, wobei der Modifikator von (a) Cu, Ag, Bi oder deren Mischungen ist.

23. Katalysatorsystem nach Anspruch 22, wobei der Modifikator von (a) Cu-Oxid ist.

24. Katalysatorsystem nach Anspruch 22, wobei der Modifikator von (a) Ag-Oxid ist.

25. Katalysatorsystem nach Anspruch 22, wobei der Modifikator von (a) Bi-Oxid ist.

26. Katalysatorsystem nach Anspruch 20, wobei das Platin, Palladium, Rhodium, Kobalt, Nickel, Eisen, Kupfer, Molybdän oder Kombinationen von (b) 0,005 bis 0,05 Gramm je cc des gesamten Oxidationskatalysator- und Absorbermaterials umfasst.

27. Katalysatorsystem nach Anspruch 26, wobei der Träger mit hoher Oberfläche aus (b) Al₂O₃, TiO₂, ZrO₂, SiO₂ oder deren Mischungen ist.

28. Katalysatorsystem nach Anspruch 27, wobei das Alkali oder Erdalkali von (b) 0,000005 bis 0,02 Gramm je cc des gesamten Oxidationskatalysators und Absorbermaterials umfasst.

29. Katalysatorsystem nach Anspruch 28, wobei der Metalloxidsorberbestandteil aus (a) ein Oxid von Ti, Zr, Hf, Ce oder deren Mischungen umfasst.

30. Katalysatorsystem nach Anspruch 29, wobei der Modifikator von (a) Cu-Oxid ist.

31. Vorrichtung umfassend:
A. Eine Abgasbehandlungsanordnung (umfassend):
(1) wenigstens zwei Katalysatorzonen, wobei jede Katalysatorzone ein Katalysatorsystem enthält, umfassend getrennte Betten aus (a) einem Katalysator/Sorber umfassend einen Edelmetallkatalysatorbestandteil, einen Metalloxidsorberbestandteil, einen Modifikator bestehend aus Oxiden von Ag, Cu, Bi, Sb, Sn, As, In, Pb, Au oder deren Mischungen und (b) ein Material umfassend einen Oxidationskatalysator gewählt aus Platin, Palladium, Rhodium, Kobalt, Nickel, Eisen, Kupfer, Molybdän oder deren Kombinationen abgeschieden auf einem Träger mit hoher Oberfläche, einem Absorbermaterial gewählt aus einem Hydroxid, Carbonat, Bicarbonat eines Alkali oder Erdalkali oder deren Mischungen
(2) eine Hauptabgaseinlassleitung verbunden mit
(3) einem Abgaseinlassventil
(4) eine separate sekundäre Abgaseinlassleitung von dem Abgaseinlassventil angrenzend verbunden mit dem (a) Bett jeder der Katalysatorzonen,
(5) eine separate sekundäre Abgasauslassleitung, welche sich von jeder dieser Katalysatorzonen angrenzend an (b) Bett dieser erstreckt und verbunden ist mit
(6) einem Abgasauslassventil verbunden mit einer Hauptabgasauslassleitung, welche sich von dem Abgasauslassventil erstreckt, wobei ein Dampfflussweg durch jede der Katalysatorzonen durch beide getrennte Betten von dem Einlass zu dem Auslass in einer Anordnung vorhanden ist; und
B. eine Regenerationsanordnung umfassend:
(1) eine Hauptregenerationsgaseinlassleitung verbunden mit
(2) einem Regenerationsgasventil,
(3) einer separaten sekundären Regenerationsgaseinlassleitung von dem Regenerationsgaseinlassventil verbunden mit jeder der Katalysatorzonen, angeschlossen mit den (b) Betten dieser,
(4) einen separaten sekundären Regenerationsgasauslass, welcher sich von jeder der Katalysatoren an dem (a) Bett dieser erstreckt und verbunden ist mit
(5) einem Regenerationsgasauslassventil und
(6) einer Hauptregenerationsgasauslassleitung, welche sich von dem Regenerationsgasauslassventil erstreckt.

32. Ein Verfahren zur Behandlung eines gasförmigen Stromes, welcher gasförmige Schwefelverbindungen und/oder NOₓ-Verbindungen enthält, in einer Vorrichtung gemäß Anspruch 31 umfassend die Schritte:
A. Einen Behandlungszyklus umfassend:
(1) Zuführen eines Gases enthaltend gasförmige Schwefelverbindungen und/oder NOₓ-Verbindungen in die Hauptabgaseinlassleitung zu dem Abgaseinlassventil,
(2) Einstellen des Abgaseinlassventils auf eine erste Katalysatorzone im Kontakt mit dem Katalysatorsystem,
(3) Durchleiten des Gases, welches gasförmige Schwefelverbindungen und/oder NOₓ-Verbindungen enthält, durch die sekundäre Abgaseinlassleitung zu der ersten Katalysatorzone, um das (a) Bett zunächst zu berühren und Abziehen des Abgasstromes aus der ersten Katalysatorzone durch die zweite Abgasauslassleitung zu dem Abgasventil,
(4) wobei das Abgasauslassventil eingestellt ist, um sich mit der Hauptabgasauslassleitung zu verbinden,
(5) Einstellen des Abgaseinlassventils und des Abgasauslassventils von der ersten Katalysatorzone in eine andere Katalysatorzone, wobei die Zufuhr des Gases, welches die gasförmige Schwefelverbindung und/oder NOₓ-Verbindungen enthält, beendet wird; und
B. ein Regenerationsgaszyklus nach dem Behandlungszyklus umfassend:
(1) Zuführen eines Regenerationsgases durch die Hauptregenerationsleitung zu dem Regenerationsgasventil,
(2) Einstellen des Regenerationsgasventils, um mit der ersten Katalysatorzone in Kontakt zu treten und Durchleiten des Regenerationsgases durch die sekundäre Regenerationsgasleitung zu der ersten Katalysatorzone, um das (b) erste Bett zu kontaktieren,
(3) Abziehen des Regenerationsgases aus der ersten Katalysatorzone durch die zweite Regenerationsgasleitung zu
(4) dem Regenerationsgasventil, welches eingestellt ist, um sich mit der Hauptregenerationsgasleitung zu verbinden.

33. Verfahren nach Anspruch 32, wobei der Behandlungszyklus und der Regenerationszyklus wiederholt werden.

## Revendications

1. Procédé pour éliminer des composés soufrés gazeux et/ou NOₓ comprenant la mise en contact d'un courant gazeux contenant des composés soufrés gazeux et/ou NOₓ avec un système catalyseur comprenant des lits discrets de (a) un catalyseur/sorbant comprenant un composant catalyseur métal noble, un composant sorbant oxyde métallique, et un modificateur constitué d'oxydes d'Ag, Cu, Bi, Sb, Sn, As, In, Pb, Au ou de mélanges de ceux-ci et (b) un matériau comprenant un catalyseur d'oxydation choisi parmi le platine, le palladium, le rhodium, le cobalt, le nickel, le fer, le cuivre, le molybdène ou des combinaisons de ceux-ci, disposé sur un support de surface spécifique élevée, un matériau absorbant choisi parmi un hydroxyde, un carbonate, un bicarbonate d'un alcalin ou d'un alcalino-terreux ou des mélanges de ceux-ci dans des conditions pour éliminer ledit composé soufré gazeux et/ou NOₓ dudit courant vers ledit système catalyseur et le retenir dedans pour provoquer une diminution de la capacité dudit système à éliminer et à retenir lesdits composés soufrés et/ou NOₓ : et puis la régénération du système catalyseur comprenant la mise en contact dudit système catalyseur avec un gaz régénérant dans des conditions pour éliminer les composés soufrés et/ou de NOₓ retenus, ledit gaz régénérant comprenant un gaz réducteur grâce auquel une partie de la capacité du système catalyseur à éliminer et à retenir lesdits composés soufrés et NOₓ est restaurée.

2. Procédé selon la revendication 1, dans lequel ledit courant gazeux contenant des composés soufrés et/ou NOₓ s'écoule dans une première direction et ledit gaz régénérant s'écoule dans une seconde direction inverse à ladite première direction.

3. Procédé selon la revendication 2, dans lequel de l'essence est présente dans ledit gaz régénérant.

4. Procédé selon la revendication 2, dans lequel du diesel est présent dans ledit gaz régénérant.

5. Procédé selon la revendication 1, dans lequel (a) le catalyseur/sorbant comprend du Pt et est supporté par un oxyde de céramique.

6. Procédé selon la revendication 5, dans lequel le Pt comprend de 0,005 à 0,05 gramme par cc du composant catalyseur métal noble et d'un composant sorbant oxyde métallique.

7. Procédé selon la revendication 1, dans lequel ledit composant catalyseur métal noble de (a) comprend Pt, Pd, Rh, Ru ou des mélanges de ceux-ci.

8. Procédé selon la revendication 1, dans lequel le composant sorbant oxyde métallique de (a) est un oxyde de Ti, Zr, Hf, Ce ou des mélanges de ceux-ci.

9. Procédé selon la revendication 7, dans lequel le composant sorbant oxyde métallique de (a) est un oxyde de Ti, Zr, Hf, Ce ou des mélanges de ceux-ci.

10. Procédé selon la revendication 1, dans lequel le modificateur de (a) est Cu, Ag, Bi ou des mélanges de ceux-ci.

11. Procédé selon la revendication 9, dans lequel le modificateur de (a) est un oxyde de Cu, Ag, Bi ou des mélanges de ceux-ci.

12. Procédé selon la revendication 11, dans lequel le modificateur de (a) est de l'oxyde de Cu.

13. Procédé selon la revendication 11, dans lequel le modificateur de (a) est de l'oxyde d'Ag.

14. Procédé selon la revendication 11, dans lequel le modificateur de (a) est de l'oxyde de Bi.

15. Procédé selon la revendication 1, où le gaz de régénération comprend un véhicule inerte et un composant réducteur.

16. Procédé selon la revendication 15, où le gaz inerte est de l'azote, de l'hélium, de l'argon, ou de la vapeur.

17. Procédé selon la revendication 16, dans lequel le composant réducteur est de l'hydrogène, du méthane, des hydrocarbures de C₁ à C₁₂ ou des mélanges de ceux-ci.

18. Procédé selon la revendication 1, dans lequel le gaz de régénération comprend de l'oxygène.

19. Système catalyseur comprenant des lits discrets de (a) un catalyseur/sorbant comprenant un composant catalyseur métal noble, un composant sorbant oxyde métallique, et un modificateur constitué d'oxydes d'Ag, Cu, Bi, Sb, Sn, As, In, Pb, Au ou de mélanges de ceux-ci et (b) un matériau comprenant un catalyseur d'oxydation choisi parmi le platine, le palladium, le rhodium, le cobalt, le nickel, le fer, le cuivre, le molybdène ou des combinaisons de ceux-ci, disposé sur un support de surface spécifique élevée, un matériau absorbant choisi parmi un hydroxyde, un carbonate, un bicarbonate d'un alcalin ou d'un alcalino-terreux ou des mélanges de ceux-ci.

20. Système catalyseur selon la revendication 19, dans lequel ledit composant catalyseur métal noble de (a) comprend du Pt, Pd, Rh, Ru ou des mélanges de ceux-ci.

21. Système catalyseur selon la revendication 20, dans lequel le composant sorbant oxyde métallique de (a) est un oxyde de Ti, Zr, Hf, Ce ou des mélanges de ceux-ci.

22. Système catalyseur selon la revendication 21, dans lequel le modificateur de (a) est du Cu, Ag, Bi ou des mélanges de ceux-ci.

23. Système catalyseur selon la revendication 22, dans lequel le modificateur de (a) est de l'oxyde de Cu.

24. Système catalyseur selon la revendication 22, dans lequel le modificateur de (a) est de l'oxyde d'Ag.

25. Système catalyseur selon la revendication 22, dans lequel le modificateur de (a) est de l'oxyde de Bi.

26. Système catalyseur selon la revendication 20, dans lequel lesdits platine, palladium, rhodium, cobalt, nickel, fer, cuivre, molybdène ou combinaisons de (b) comprennent 0, 005 à 0, 05 gramme par cc du total du catalyseur d'oxydation et du matériau absorbant.

27. Système catalyseur selon la revendication 26, dans lequel le support de surface spécifique élevée de (b) est Al₂O₃, TiO₂, ZrO₂, SiO₂ ou des mélanges de ceux-ci.

28. Système catalyseur selon la revendication 27, dans lequel l'alcalin ou l'alcalino-terreux de (b) comprend 0,000005 à 0,02 gramme par cc du total du catalyseur d'oxydation et du matériau absorbant.

29. Système catalyseur selon la revendication 28, dans lequel le composant sorbant oxyde métallique de (a) est un oxyde de Ti, Zr, Hf, Ce ou des mélanges de ceux-ci.

30. Système catalyseur selon la revendication 29, dans lequel le modificateur de (a) est de l'oxyde de Cu.

31. Appareil comprenant :
A. une configuration de traitement d'un échappement :
(1) au moins deux zones de catalyseur, chacune desdites zones de catalyseur contenant un système catalyseur comprenant des lits discrets de (a) un catalyseur/sorbant comprenant un composant catalyseur métal noble, un composant sorbant oxyde métallique, et un modificateur constitué d'oxydes d'Ag, Cu, Bi, Sb, Sn, As, In, Pb, Au ou de mélanges de ceux-ci et (b) un matériau comprenant un catalyseur d'oxydation choisi parmi le platine, le palladium, le rhodium, le cobalt, le nickel, le fer, le cuivre, le molybdène ou des combinaisons de ceux-ci, disposé sur un support de surface spécifique élevée, un matériau absorbant choisi parmi un hydroxyde, un carbonate, un bicarbonate d'un alcalin ou d'un alcalino-terreux ou de mélanges de ceux-ci.
(2) une ligne d'entrée principale de l'échappement connectée à
(3) une valve d'entrée de l'échappement,
(4) une ligne d'entrée secondaire séparée de l'échappement provenant de ladite valve d'entrée de l'échappement connectée adjacente au (a) lit de chacune desdites zones de catalyseur,
(5) une ligne de sortie secondaire séparée de l'échappement s'étendant à partir de chacune desdites zones de catalyseur adjacente au (b) lit de celle-ci et se connectant à
(6) une valve de sortie de l'échappement connectée à la ligne de sortie principale de l'échappement s'étendant à partir de ladite valve de sortie de l'échappement, moyennant quoi il existe un chemin d'écoulement de vapeur au travers de chaque zone de catalyseur au travers des deux lits discrets de celui-ci à partir des entrées vers les sorties dans une configuration ;
et
B. une configuration de régénération comprenant :
(1) une ligne d'entrée principale d'un gaz de régénération connectée à
(2) une valve du gaz de régénération,
(3) une ligne d'entrée secondaire séparée du gaz de régénération provenant de ladite valve d'entrée du gaz de régénération connectée à chacune desdites zones de catalyseur adjacente auxdits (b) lits de celui-ci,
(4) une sortie secondaire séparée du gaz de régénération s'étendant à partir de chacune desdites zones de catalyseur adjacente au (a) lit de celle-ci et connectée à,
(5) une valve de sortie du gaz de régénération et
(6) une ligne de sortie principale du gaz de régénération s'étendant à partir de ladite valve de sortie du gaz de régénération.

32. Procédé de traitement d'un courant gazeux contenant des composés soufrés gazeux et/ou des composés de NOₓ dans un appareil selon la revendication 31 comprenant les étapes de :
A. un cycle de traitement comprenant :
(1) introduire un gaz contenant des composés soufrés gazeux et/ou des composés de NOₓ dans ladite ligne d'entrée principale de l'échappement vers ladite valve d'entrée de l'échappement,
(2) ajuster ladite valve d'entrée de l'échappement à une première zone de catalyseur pour sa mise en contact avec ledit système catalyseur,
(3) faire passer le gaz contenant le composé soufré gazeux et/ou les composés de NOₓ au travers de la ligne d'entrée secondaire de l'échappement vers ladite première zone de catalyseur pour sa mise en contact avec ledit (a) premier lit, et retirer ledit courant d'échappement de ladite première zone de catalyseur au travers de ladite ligne de sortie secondaire de l'échappement vers ladite valve de l'échappement,
(4) ladite valve de sortie de l'échappement étant ajustée pour se connecter à ladite ligne de sortie principale de l'échappement,
(5) ajuster ladite valve d'entrée de l'échappement et ladite valve de sortie de l'échappement à partir de ladite première zone de catalyseur vers une zone de catalyseur différente grâce à quoi on termine ladite introduction de gaz contenant des composés soufrés gazeux et/ou des composés de NOₓ ; et
B. un cycle de gaz régénérant après ledit cycle de traitement comprenant :
(1) introduire un gaz régénérant au travers de ladite ligne principale du gaz régénérant vers ladite valve du gaz régénérant,
(2) ajuster ladite valve du gaz régénérant pour le mettre en contact avec ladite première zone de catalyseur et faire passer ledit gaz régénérant au travers de ladite ligne secondaire du gaz régénérant vers ladite première zone de catalyseur pour sa mise en contact avec ledit (b) premier lit,
(3) retirer ledit gaz régénérant de ladite première zone de catalyseur au travers de ladite ligne secondaire du gaz régénérant vers
(4) ladite valve du gaz régénérant qui est ajustée pour se connecter à ladite ligne principale du gaz régénérant.

33. Procédé selon la revendication 32, dans lequel le cycle de traitement et le cycle de régénération sont répétés.
